# EUROPEAN PATENT APPLICATION

(11) **EP 1 534 025 A2**
(43) Date of publication of application: **25.05.2005**
(21) Application number: 04256858.4
(22) Date of filing: 05.11.2004
(51) Int. Cl.: H04Q 7/24

(54) **System for providing interoperability of call pickup service in a proprietary enterprise communication network and a cellular communication network**

(30) Priority: 24.11.2003 US 720923
(71) Applicant: LUCENT TECHNOLOGIES INC., Murray Hill, New Jersey 07974-0636 (US)
(72) Inventor: Bushnell, William J., St. Charles Illinois 60174 (US); Chung-Zin, Liu, Naperville Illinois 60565 (US)
(74) Representative: Watts, Christopher Malcolm Kelway, Dr.

(57) **Abstract**

The present interoperability system serves to pass presence and supervision information relating to a user's wireless station set between a cellular communication network and an enterprise communication network. The interoperability system functions to extend the services, such as call pick up, provided in the enterprise communication network to the cellular communication network based on the presence and supervision data provided by the interoperability system. The provision of ubiquitous call pick up service is accomplished by transmitting alert signals not only to the user's telephone line in the enterprise communication network to alert members of the call pick up group proximate to the user's office, but also to the user's wireless station set operating in the service area of the cellular communication network as well as members of the call pick up group also operating in the service area of the cellular communication network.

## Description

### Field of the Invention

This invention relates to proprietary communication networks and their interconnection with the Public Switched Telephone Network and existing cellular communication networks.

### Problem

It is a problem in enterprise communication networks that these networks are disjunct from the existing public communication networks. Therefore, to obtain service in both networks, the users who are served by the enterprise communication network must be equipped with two wireless station sets, each with their own unique telephone numbers, with each number defining the user's presence in the corresponding network.

Enterprise communication networks consist of proprietary voice and data networks used to serve a predetermined set of users who are typically employed by a single entity. A Private Branch Exchange is typically used to provide voice-based services to these users and associated Wire-line or Wireless Local Area Networks are used for data connectivity. In this environment, the user is equipped with a wireless station set (or handset) that is assigned a unique telephone number, which is served by the Private Branch Exchange. Connections to the Public Switched Telephone Network for voice calls are via the Private Branch Exchange, while data connectivity to an IP Network is accomplished via a gateway, equipped with a firewall.

An existing public communication network, such as a cellular communication network, consists of a plurality of Mobile Switching Centers, each of which serves one or more base station subsystems that provide the radio frequency links to the plurality of wireless station sets that are operational in each call coverage area (termed cell) provided by the associated base station subsystem. One Mobile Switching Center is typically termed the user's home Mobile Switching Center and it maintains the user's identification, authentication and call services definition data in an associated Home Location Register which works in coordination with the ANSI-41 or GSM MAP Network. Other Mobile Switching Centers maintain their own Home Location Registers and also include Visited Location Registers to store call authorization data for users who roam out of their home service area to the call coverage area of the visited Mobile Switching Centers. In this environment, the user is equipped with a wireless station set that is assigned a unique telephone number, and calls are processed by the Mobile Switching Center which serves the present location of the user. Both voice and data connectivity in the existing cellular communication network is through the serving Mobile Switching Center to the Public Switched Telephone Network and to an IP Network, respectively.

Thus, the user is provided with two different wireless station sets, one for each network, and associated different telephone numbers. Since the two networks are not interoperated together, all incoming calls are routed solely on the dialed number, not the presence of the user in one of these networks. Furthermore, the services provided by each network are not extensible to the other network. For example, Wire-line Call Pick Up service allows multiple employees to answer each others telephones. Typically, the employees are located in the same office and can hear alerting tones generated by the wire-line telephones. If an employee wants to pickup a call ringing at another employee's desk, the employee picks up their telephone and dials a special code. This causes the ringing call to be forwarded to the employee's telephone. The key to this arrangement is that the employees are able to hear each others telephones ring. In the instance where employees can roam from their office location, call pickup service fails to function.

Thus, there is a need in the present communication network environment to extend services that are traditionally provided by enterprise wire-line and wireless communication networks to users who roam between the enterprise communication network and the public cellular communication network.

### Solution

The above described problems are solved and a technical advance achieved by the present system for providing interoperability of a proprietary enterprise communication network with a cellular communication network (termed "interoperability system" herein) which serves to pass presence and supervision information relating to a user's wireless station set between a cellular communication network and an enterprise communication network, which typically includes a Private Branch Exchange system. The user is equipped with a wireless station set which is served, when located within the coverage area of the enterprise system, by wireless LAN access technology, such as that defined in the present 8 02.11 standard, via one or more cell sites implemented in the premises served by the enterprise communication network. Alternatively, the user's wireless station set can be a combined services device, capable of wire-line and wireless communications, such as a wireless handset which communicates in the enterprise communication network via a base station, which is connected as a wired device to the Private Branch Exchange, and via wireless LAN access technology, when located remote from the base station. The wireless station set is also capable of communicating with the base station subsystems of the existing cellular communication network in a conventional manner when the user is present in the coverage area of the cells of the cellular communication network.

The interoperability system functions to extend the wireless Private Branch Exchange services provided in the enterprise communication network to the cellular communication network based on the presence and supervision data provided by the interoperability system. The provision of ubiquitous service to the user, regardless of their location provides a significant advantage over existing Private Branch Exchange and cellular communication network services. In addition, the user is equipped with only one wireless station set, which can operate as a cordless Private Branch Exchange extension in the office or as a standard wireless station set outside of the office. By thereby provisioning the Private Branch Exchange with this wireless station set mobility allows the user to roam within the wireless coverage area of one of the two networks or to roam between the two networks. This capability also provides telephone coverage personnel with information about the status of a user's wireless station set before they attempt to forward a call or simply call the user's wireless station set.

For example, with Presence Based Call Pick Up, the presence of a waiting call for one employee triggers notification to all the members of the Pick Up Group. The waiting call notification can be delivered via distinctive ringing patterns, special call waiting tones or instant messages. With Presence Based Call Pick Up, the members of the Call Pick Up Group no longer need to be co-located or even served by the same call control or switching system. Members of the Call Pick Up Group can include remote workers and even wireless telephones.

### Brief Description of the Drawings

Figure 1 illustrates, in block diagram form, the architecture of existing communication networks, including a proprietary enterprise communication network and a cellular communication network;
Figure 2 illustrates, in block diagram form, the architecture of existing communication networks, including a proprietary enterprise communication network and a cellular communication network that are equipped with the present network interoperability system;
Figure 3 illustrates, in flow diagram form, the operation of the present network interoperability system in an existing communication network, including a proprietary enterprise communication network and a cellular communication network, to provide call pick up service; and
Figure 4 illustrates additional details of the network interoperability system.

### Detailed Description

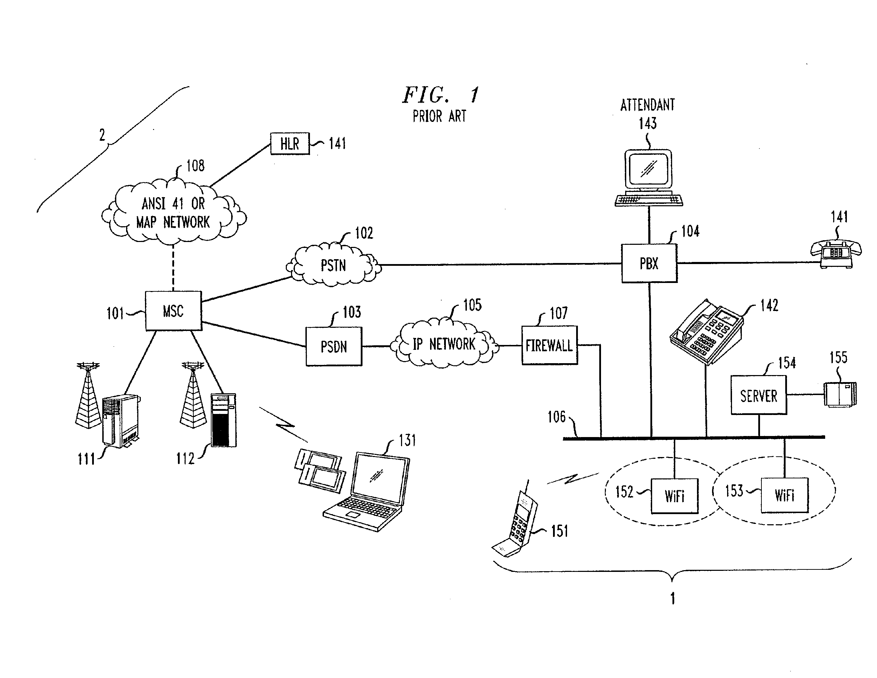

Figure 1 illustrates in block diagram form the architecture of existing communication networks, including a proprietary enterprise communication network and a cellular communication network.

A cellular communication network 2 consists of a plurality of Mobile Switching Centers 101, each of which serves one or more base station subsystems (such as 111, 121) that provide the radio frequency links to the plurality of wireless station sets 131 that are operational in each call coverage area (termed cell) (not shown) provided by the associated base station subsystem. One Mobile Switching Center 101 is typically termed the user's home Mobile Switching Center and it maintains the user's identification, authentication and call services definition data in an associated Home Location Register 141 via an ANSI-41 or GSM MAP network 108. Other Mobile Switching Centers (not shown) maintain their own Home Location Registers and Visited Location Registers to store call authorization data for users who roam out of their home service area to the call coverage area of the visited Mobile Switching Centers. The Mobile Switching Center 101 is connected to the Public Switched Telephone Network 102 for voice calls and to the Public Data Switched Network 103 for data calls.

Enterprise communication networks 1 typically consist of proprietary voice and data networks used to serve a predetermined set of users who are typically employed by a single entity. A Private Branch Exchange 104 is typically used to provide voice-based services to the users via various communication devices, such as Plain Old Telephone Sets 141, IP telephones 142, attendant consoles 143, and the like. The associated Wire-line or Wireless Local Area Networks 106 are used for data connectivity to serve wireless station sets, such as 151 via WiFi nodes 152, 153, as well as servers 154 that interconnect back-data storage and/or processing elements 155. Conventional data terminals can also be served by the associated Wire-line or Wireless Local Area Networks 106 either via a direct wired connection to the Wire-line network or via a radio frequency link to Wireless Local Area Networks 106. In this environment, the user is equipped with a dual mode wireless station set 131 that is assigned a single unique telephone number, which is served by the Private Branch Exchange 143. Connections to the Public Switched Telephone Network 102 for voice calls are via the Private Branch Exchange 104, while data connectivity to an IP Network 105 is accomplished via a gateway 107, equipped with a firewall.

### Architecture of the Interoperability System

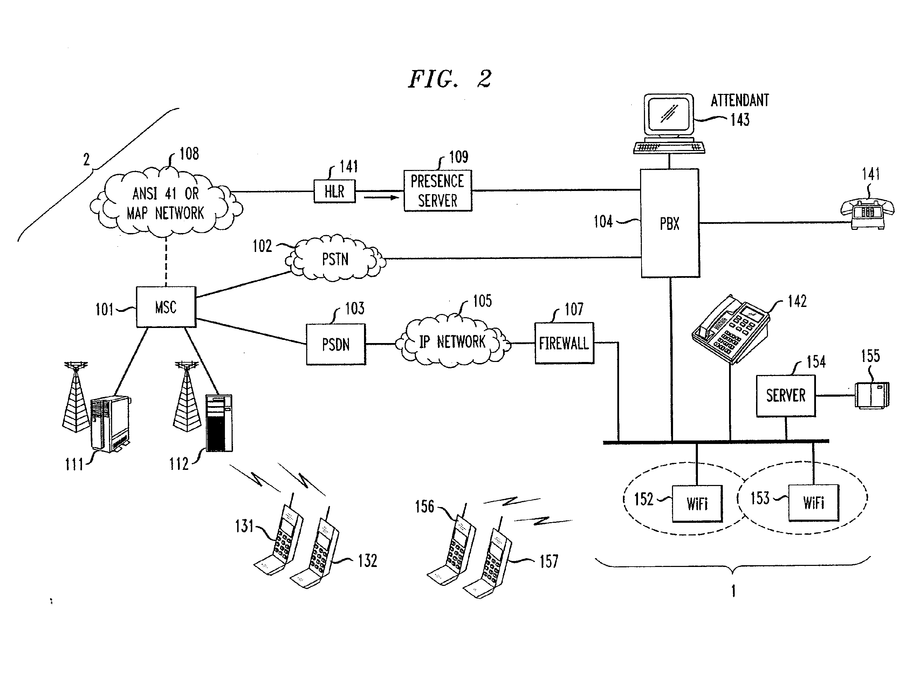

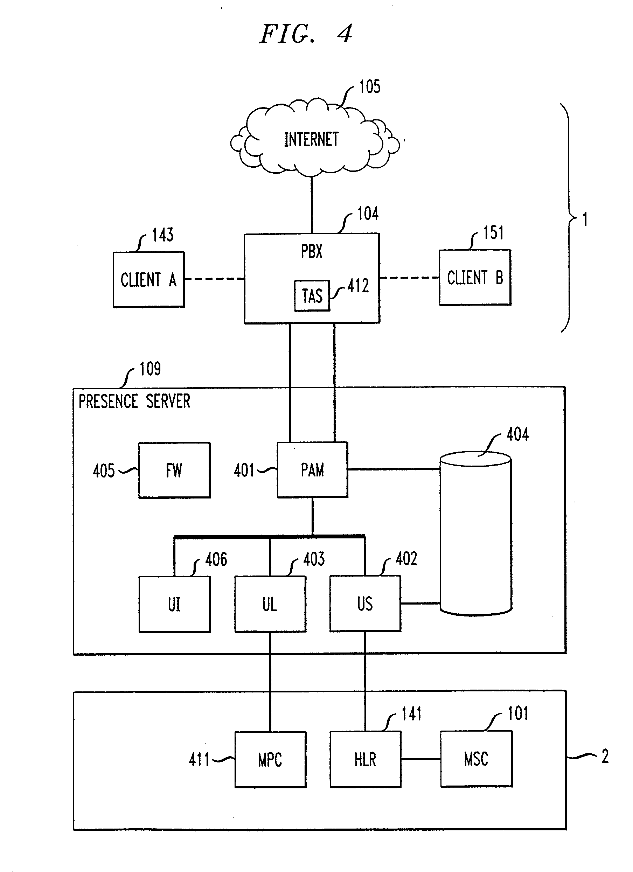

Figure 2 illustrates, in block diagram form, the architecture of existing communication networks, including a proprietary enterprise communication network 1 and a cellular communication network 2 t hat are equipped with the present network interoperability system. The difference between this network and the existing network of Figure 1 is the use of the Presence Server 109, which is connected to both the Home Location Register 141 of the cellular communication network 2 and an element, typically the Private Branch Exchange 104, of the enterprise communication network 1 and its associated interconnections illustrated in Figure 4, which together comprise the present network interoperability system.

The cellular communication network 2 provides the presence and supervision management for the roaming user's wireless station set 131, or the user wireless station set 1 31 registers with t he Private B ranch Exchange 104. Once the user wireless station set 131 is roaming into the cellular communication network 2, the user wireless station set 131 registers with the serving Mobile Switching Center 101 and the user's Home Location Register 141 is updated with the mobile user presence data. The Home Location Register 141 passes the presence and busy/idle status data of the user wireless station set 131 to the Presence Server 109, which communicates with the Private B ranch Exchange 104. The interface between the Private Branch Exchange 104 and the Presence Server 109 is typically an open interface, since the Presence Server 109 typically serves multiple Private Branch Exchange 104 systems. The Private Branch Exchange 104 includes apparatus to interface with the Presence Server 109, such as inquiry software to enable the c all controller or attendant functions to generate a n inquiry for transmission to the Presence Server 109 to determine whether the user is presently being served by the cellular communication network 2. The status data maintained in the Presence Server 109 is updated on a periodic or demand basis. The Presence Server 109 is shown as a stand-alone element, but this functionality can alternatively be integrated, in whole or in part, into the enterprise communication network 1 (such as in the Private Branch Exchange 104) or the cellular communication network 2 (such as the Home Location Register 141).

In this environment, the members of the Pick Up Group can be wireless station sets 156, 157 and wire-line station sets 142 located within the service area of the enterprise communication network 1 and wireless station sets 131, 132 located within the service area of the cellular communication network 2. The network interoperability system serves to extend the call pick up service across both the enterprise communication network 1 and the cellular communication network 2, as described below.

### Implementation of the Network Interoperability System

The concept of presence technology is to enable a user and network elements to know the status and availability of another user to thereby improve communication efficiency. The concept of presence was initially associated with Instant Messaging service, where a user was advised whether a colleague is available to receive messages. The present network interoperability system extends this concept to include monitoring the registration and busy or idle status of any type of user device, including wireless telephones, VolP Clients, traditional POTS telephones, Push to Talk Clients, multimedia clients, etc. Furthermore, the concept of presence has been extended to include Availability, where a user can explicitly share their availability for communicating with colleagues. Typical availability states include: out of the office, in a meeting with a client, in a conference call, on vacation, sick, etc. A user can provide this information, or it can be inferred from the user's on line calendar. Another dimension to presence is Location, which refers to the geographical location of a user's device. Wireless networks can triangulate signal strength measurements to provide the location of wireless handsets and PDAs. More recently, the concept of location is extended to laptop computers, Instant Messaging clients or IP Softphones that might connect to wire-line access networks at work, at home or at remote locations.

By collecting and disseminating the suite of presence information (status of user device, availability of the user, and location of the user), family members, friends and colleagues can select the most effective and appropriate means of communicating with the user. For example, network applications (e.g. Find Me - Follow Me Service) can use presence information to more efficiently and appropriately route or block incoming communication requests. A call to an office wire-line phone can be forwarded to a wireless phone only if the wireless phone is active and idle and the user's availability indicates that they are not in a meeting.

As shown in Figure 4, the Presence Server 109 includes a plurality of elements, which include:
- FM - Framework 405
- PAM - Presence and Availability Management 401
- US - User Status 402
- UL - User Location 403
- UI - User Identification 406
These various elements perform the basic interoperability functions including:
- Collection of network presence information
- Storage of presence information both explicit and implicit
- Handling implicit network terminal status updates
- Maintenance of the user's presence policy
- Authorization and authentication.

The Presence Server 109 is connected via the UL - User Location 403 to the Mobile Presence Client 411 located in the cellular communication network 2, in order to receive data regarding the present location of the user in the cellular communication network 2. In addition, the Presence Server 109 is connected via the US - User Status 402 to the Home Location Register 141 in the cellular communication network 2 to obtain the present busy/idle status of the user's wireless station set 131 as determined by the Mobile Switching Center 101. In addition, the UI - User Identification 406 element functions to validate the identity of a user when an inquiry or status/location update is received. The Presence and Availability Management 401 element performs the information management, retrieval, and delivery functions by coordinating t he operation of the above-noted components of the Presence Server 109 with components, such as the Telephone Access Server 412, resident in the Private Branch Exchange 104, which serves to provide location and status information to the Presence Server 109 for the user's wireless station set when it is served by the Private Branch Exchange 104. The database of user information is maintained in memory 404 and Framework 405 represents the Presence Server administration component, responsible for the registration of the various systems and applications that interconnect with the Presence Server 109.

### Presence Enabled Call Pick Up

Wire-line Call Pick Up service allows multiple employees to answer each others telephones. Typically, the employees are located in the same office and can hear alerting tones generated by the wire-line telephones. If an employee wants to pickup a call ringing at another employee's desk, the employee picks up their telephone and dials a special code or click Pickup icon on IP phone. This causes the ringing call to be forwarded to the employee's telephone. The key to this arrangement is that the employees are able to hear each others telephones ring. With Presence Based Call Pick Up, the presence of a waiting call for one employee triggers notification to all the members of the Pick Up Group. The waiting call notification can be delivered via distinctive ringing patterns, special call waiting tones or instant messages. With Presence Based Call Pick Up, the members of the Call Pick Up Group no longer need to be co-located or even served by the same call control or switching system. Members of the Call Pick Up Group can include remote workers and even wireless telephones.

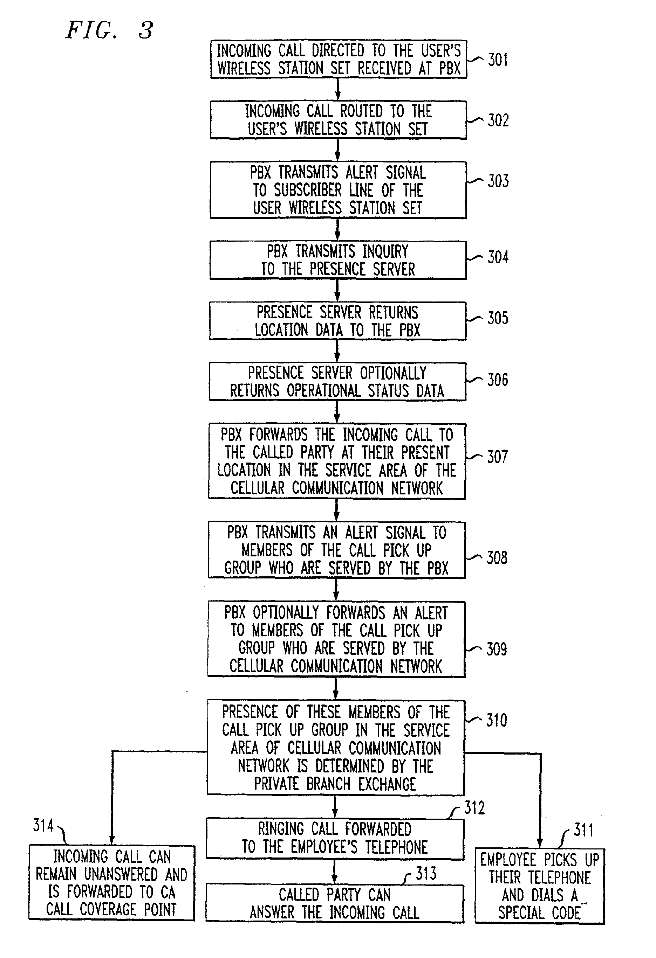

Figure 3 illustrates, in flow diagram form, the operation of the present network interoperability system in an existing communication network, including a proprietary enterprise communication network 1 and a cellular communication network 2, to provide Call Pick Up service. At step 301, an incoming call from a calling party, directed to the user's wireless station set 131, is routed through the Public Switched Telephone Network 102 to the Private Branch Exchange 104 and thence at step 302 to the user's wireless station set 131, using the user's telephone number, if the calling party is located outside of the Private Branch Exchange 104, and by the Private Branch Exchange 104 directly at step 302 to the user's wireless station set 131 if the calling party is located within the coverage area of the enterprise communication network 1. The Private Branch Exchange 104, in response to receipt of the incoming call, transmits an alert signal to the subscriber line of the user wireless station set 131 at step 303.

Pursuant to standard Call Pick Up service, multiple employees can answer each others telephones. Typically, the employees are located in the same office and can hear alerting tones generated by the wire-line telephones. If an employee wants to pickup a call ringing at another employee's desk, the employee picks up their telephone and dials a special code. This causes the ringing call to be forwarded to the employee's telephone. In the instance where the user (also termed "called party") is not present at their office location, the alert signal transmitted by the Private Branch Exchange 104 to the subscriber line of the user wireless station set 131, fails to provide the members of the Call Pick Up Group that there is an incoming call directed to the called party.

In order to overcome this problem, the Presence Server 109 can redirect the alert to the user wireless station set 131 and members of the Call Pick Up Group. This is accomplished at step 304 where the Private Branch Exchange 104 generates a n inquiry, which i s transmitted to t he P resence Server 109 to obtain user location data from the Presence Server 109. In this case, it is assumed that the user is roaming in the cellular communication network 2. If it is determined by the Presence Server 109 that the user is roaming in the cellular communication network 2, the Presence Server 109 returns location data at step 305 to the Private Branch Exchange 104. In addition to the location data that identifies the present or last known location of the user's wireless station set, the Presence Server 109 can optionally at step 306 return data to the Private Branch Exchange 104 that indicates the present operational status of the user. In response to the returned data, the Private Branch Exchange 104 can at step 307 forward the incoming call to the called party at their present location in the service area of the cellular communication network 2.

In addition, the Private Branch Exchange 104 can concurrently transmit an alert to other members of the Call Pick Up Group, who can be located in the service area of the enterprise communication network 1 and/or the cellular communication network 2. This is accomplished at step 308 by the Private Branch Exchange 104 transmitting an alert signal to members of the Call Pick Up Group who are served by the Private Branch Exchange 104, such as wireless station sets 156, 157. In addition, the Private Branch Exchange 104 at step 309 can optionally forward an alert to members of the Call Pick Up Group who are served by the cellular communication network 2, such as wireless station set 132. The presence of these members of the Call Pick Up Group in the service area of cellular communication network 2, such as wireless station set 132, is determined by the Private Branch Exchange 104 either as part of the initial inquiry of steps 304-306, or subsequently via a supplemental inquiry at step 310 which executes the steps described above with respect to steps 304-306.

The alert process continues until an employee picks up a call ringing at another employee's desk, by the employee picking up their telephone at step 311 and dialing a special code or click Pickup icon on IP phone. This causes the ringing call to be forwarded to the employee's telephone at step 312. Alternatively, the called party can answer the incoming call at step 313. Finally, the incoming call can remain unanswered and at step 314 is forwarded to a call coverage point, where the incoming call is processed in a conventional manner.

### Summary

The interoperability system serves to pass presence and supervision information relating to a user's wireless station set between a cellular communication network and an enterprise communication network, which typically includes a Private Branch Exchange system, to provide consistency of the service provides to the user, regardless of location.

## Claims

1. An interoperability system connected to an enterprise communication network a nd a public communication network for providing call pick up service to a user's wireless station set which is located in the coverage area of a one of said enterprise communication network and said public communication network, and which is a member of a call pick up group comprising at least one additional station set, comprising:
presence server means for storing user data representative a service location of a user wireless station set;
query means for exchanging said user data with at least one of said enterprise communication network and said public communication network; and
call pickup means, responsive to said user data and the presence of a call directed to said user wireless station set, for transmitting an alert signal to at least one of said additional station sets.

2. The interoperability system of claim 1 wherein said call is directed to said enterprise communication network and said user wireless station set is served by said public communication network, said call pickup means comprises:
enterprise communication network means for transmitting said alert signal to at least one of said additional station sets served by said enterprise communication network.

3. The interoperability system of claim 1 wherein said call is directed to said enterprise communication network and said user wireless station set is served by said public communication network, said call pickup means comprises:
public communication network means for transmitting said alert signal to at least one of said additional station sets served by said public communication network.

4. The interoperability system of claim 1 wherein said call pickup means comprises:
call forwarding means for transmitting an alert signal to said user wireless station set at said service location.

5. The interoperability system of claim 1 wherein said call pickup means comprises:
answer means, responsive to one of said additional station sets dialing a call pick up code or click Pickup icon on IP phone, for redirecting said call to said one of said additional station sets.

6. A method of providing call pick up service interoperability in both an enterprise communication network and a public communication network to a user's wireless station set which is located in the coverage area of a one of said enterprise communication network and said public communication network, and which is a member of a call pick up group comprising at least one additional station set, comprising:
storing user data representative a service location of a user wireless station set;
exchanging said user data with at least one of said enterprise communication network and said public communication network; and
transmitting, in response to said user data and the presence of a call directed to said user wireless station set, an alert signal to at least one of said additional station sets.

7. The method of providing call pick up service of claim 6 wherein said call is directed to said enterprise communication network and said user wireless station set is served by said public communication network, said step of transmitting comprises:
transmitting said alert signal to at least one of said additional station sets served by said enterprise communication network.

8. The method of providing call pick up service of claim 6 wherein said call is directed to said enterprise communication network and said user wireless station set is served by said public communication network, said step of transmitting comprises:
transmitting said alert signal to at least one of said additional station sets served by said public communication network.

9. The method of providing call pick up service of claim 6 wherein said step of transmitting comprises:
transmitting an alert signal to said user wireless station set at said service location.

10. The method of providing call pick up service of claim 6 wherein said step of transmitting comprises:
answer means, responsive to one of said additional station sets dialing a call pick up code or click Pickup icon on IP phone, said call to said one of said additional station sets.
